(19) Europäisches Patentamt

European Patent Office

Office européen des brevets

(11) Veröffentlichungsnummer: **0 418 426 B1**

(12) **EUROPÄISCHE PATENTSCHRIFT**

(45) Veröffentlichungstag der Patentschrift: **27.07.94**

(51) Int. Cl.⁵: **F16H 3/66**

(21) Anmeldenummer: **89123109.4**

(22) Anmeldetag: **14.12.89**

Die Akte enthält technische Angaben, die nach dem Eingang der Anmeldung eingereicht wurden und die nicht in dieser Patentschrift enthalten sind.

(54) **Schaltanordnung für ein Automatikgetriebe.**

(30) Priorität: **16.09.89 DE 3931025**

(43) Veröffentlichungstag der Anmeldung:
**27.03.91 Patentblatt 91/13**

(45) Bekanntmachung des Hinweises auf die Patenterteilung:
**27.07.94 Patentblatt 94/30**

(84) Benannte Vertragsstaaten:
**DE ES FR GB IT SE**

(56) Entgegenhaltungen:
**EP-A- 0 075 271**
**DE-A- 2 612 020**
**US-A- 4 304 153**
**US-A- 4 711 138**

**Antriebstechnik 25 (1986) Nr. 3, Seiten 67-73**

(73) Patentinhaber: **Dr.Ing.h.c. F. Porsche Aktien-gesellschaft**
**Porschestrasse 42**
**D-70435 Stuttgart(DE)**

(72) Erfinder: **Meffert, Peter, Dipl.-Ing. FH**
**Blauenstrasse 3/1**
**D-7533 Tiefenbronn(DE)**

**Beschreibung**

Die Erfindung betrifft eine Schaltanordnung für ein Automatikgetriebe für ein Kraftfahrzeug nach dem Oberbegriff des Anspruchs 1.

Ein derartiges Getriebe mit einer derartigen Schaltanordnung ist aus ATZ Automobiltechnische Zeitschrift 85 (1983) 6, Seite 393 - 398 bekannt. Das Viergang-Automatikgetriebe besteht aus einem Dreigangteil, dem bewährten Simpson-Radsatz, dem ein weiterer Planetensatz für den vierten Gang mit einer Lamellenbremse, einer Kupplung und einem Freilauf angehängt wurde.

Der Simpson-Radsatz ist ein zusammengesetztes Planetengetriebe, das aus zwei einfachen Planetengetrieben mit negativer Standübersetzung besteht, die auch als Minusgetriebe bezeichnet werden. Dabei ist ein Planetengetriebe aus Sonnenrad, Planetenradträger mit Planetenrädern und Hohlrad zusammengesetzt. Beide Minusgetriebe sind mit zwei Koppelwellen miteinander verbunden, die erste Koppelwelle verbindet das Sonnenrad des einen mit dem Sonnenrad des zweiten Planetengetriebes. Die zweite Koppelwelle verbindet das Hohlrad des ersten Planetengetriebes mit dem Planetenradträger des zweiten Planetengetriebes. Der Kraftfluß erfolgt bei den Vorwärtsgängen von außen auf das Hohlrad des zweiten Planetengetriebes; als Abtrieb dient die zweite Koppelwelle. Der erste Gang des Simpson-Radsatzes wird durch Festbremsen des ersten Planetenradträgers erzeugt, der zweite Gang durch das Festbremsen der ersten Koppelwelle erzeugt. Im dritten Gang geht der Kraftfluß auf das Sonnenrad und Hohlrad des zweiten Planetengetriebes gleichzeitig und der Simpson-Radsatz läuft als Block um.

Es ist die Aufgabe der Erfindung, dieses Getriebe auf ein Fünf-Gang-Getriebe oder Sechs-Gang-Getriebe zu erweitern, ohne daß der Bauaufwand und die räumlichen Abmessungen nennenswert vergrößert werden.

Zur Lösung dieser Aufgabe dienen die kennzeichnenden Merkmale des Anspruchs 1. Da der Simpson-Schaltanordnung eines niederen Getriebeganges die Schaltanordnung des für einen weiteren Gang, z. B. für den vierten Gang, verwendeten zusätzlichen Planetenradsatzes nachgeschaltet und so eine Multiplikation der Übersetzungsstufen erreicht wird, läßt sich ein zusätzlicher Getriebegang realisieren, ohne daß das Getriebe als Ganzes baulich verändert werden muß. Zum Schalten des zusätzlichen Getriebeganges müssen lediglich entsprechende Kupplungen und/oder Bremsen gesteuert werden.

Weitere die Erfindung ausgestaltende Merkmale enthalten die Unteransprüche.

Ein Ausführungsbeispiel der Erfindung wird anhand der gezeichneten Kraftflußbilder erläutert. Es zeigen:

Fig. 1    Schema eines Automatikgetriebes

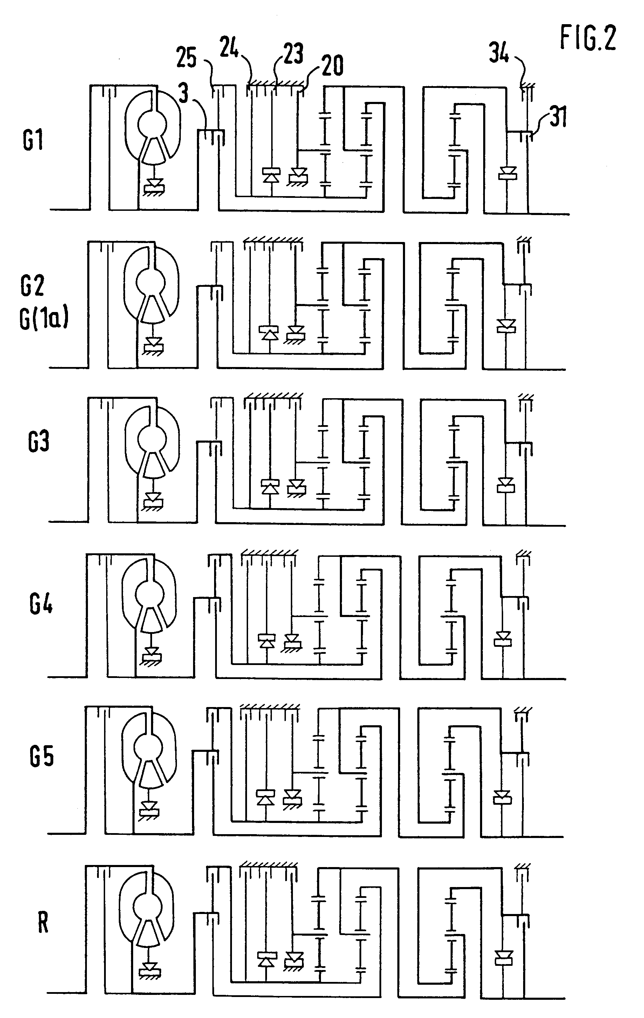

Fig. 2    Fünf-Gang-Automatikgetriebe

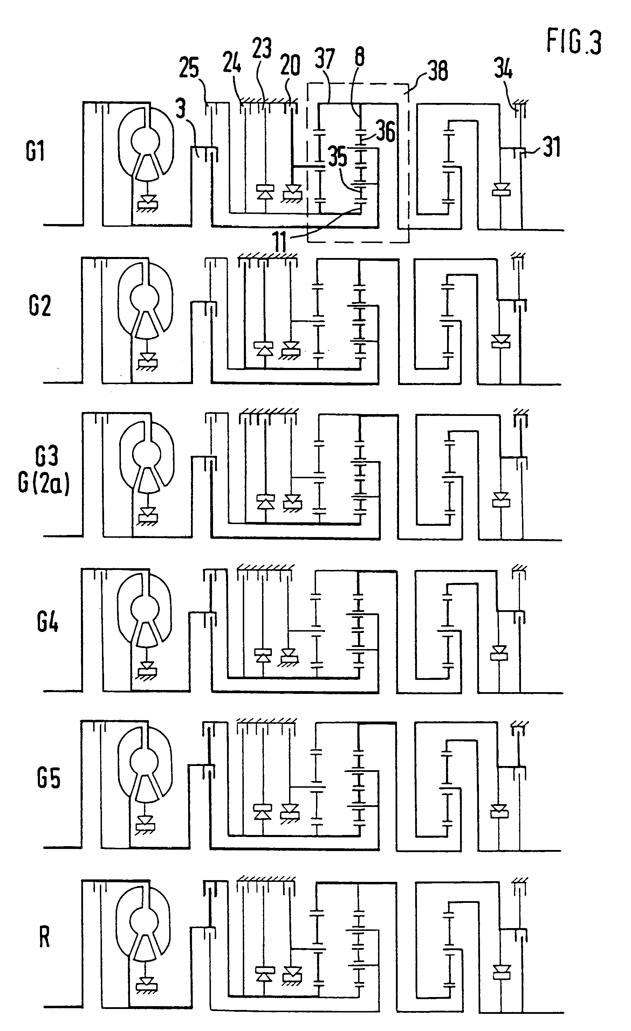

Fig. 3    Variiertes Fünf-Gang-Automatikgetriebe

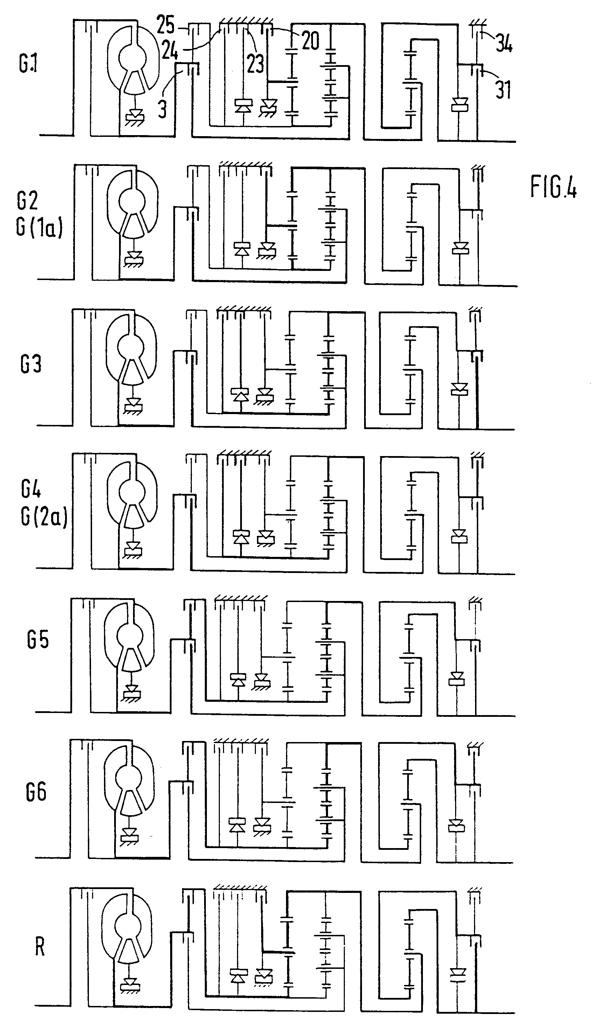

Fig. 4    Sechs-Gang-Automatikgetriebe

In den Zeichnungen bedeuten dick ausgezogene Linien tatsächlich geschaltete Kraftflüsse, dünne Linien mögliche Kraftflußverbindungen.

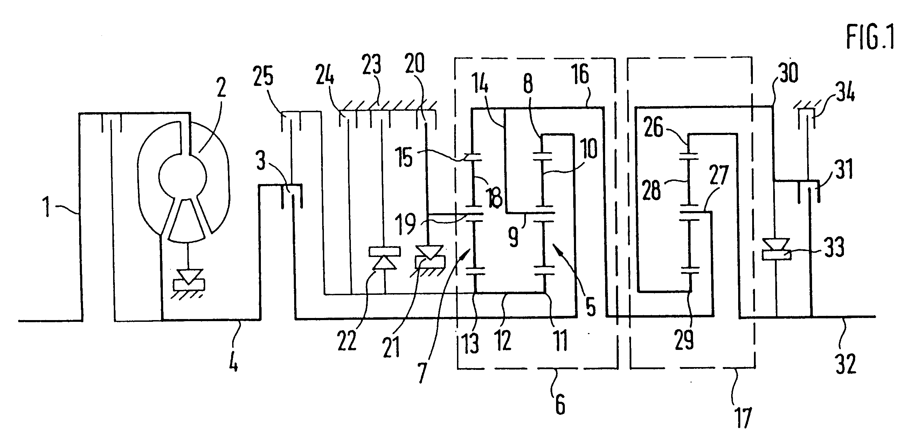

Beschreibung des Schemas eines Automatikgetriebes nach Fig. 1.

Eine vom Fahrzeugmotor kommende Welle 1 treibt über einen hydrodynamischen Wandler 2 eine zu einer Kupplung 3 führende Antriebswelle 4 an. Bei geschlossener Kupplung 3 geht der Kraftfluß auf ein zweites Planetengetriebe 5 eines Simpson-Radsatzes 6. Das zweite Planetengetriebe 5 besteht wie das parallel zu ihm liegende erste Planetengetriebe 7 aus einem Hohlrad 8, einem Planetenradträger 9 mit an ihm gelagerten Planetenrädern 10 und einem Sonnenrad 11. Von der Kupplung 3 wird das Hohlrad 8 angetrieben. Mittels Koppelwelle 12 ist das Sonnenrad 11 verbunden mit dem Sonnenrad 13 des ersten Planetengetriebes 7. Eine weitere Koppelwelle 14 verbindet den Planetenradträger 9 mit der vom Hohlrad 15 des ersten Planetengetriebes 7 kommenden Ausgangswelle 16 zu einem Planetenradsatz 17, der bei einem herkömmlichen Automatikgetriebe als 4-Gang-Overdrive-Stufe dient. Im ersten Planetengetriebe 7 kämmen mit dem Hohlrad 15 Planetenräder 18, die zugleich mit dem Sonnenrad 13 kämmen und an einem Planetenradträger 19 gelagert sind. Auf den Planetenradträger 19 wirkt eine gehäusefeste Bremse 20 und zusätzlich ein Freilauf 21 ein, der den Planetenradträger 19 in einer Umlaufrichtung sperrt.

An der Koppelwelle 12 sind ein Freilauf 22, der über eine gehäusefeste Bremse 23 wirksam ist und eine weitere Bremse 24 angebracht. Zusätzlich ist die Koppelwelle 12 über eine schaltbare Kupplung 25 mit der Antriebswelle 4 verbindbar.

Der Planetenradsatz 17 besteht aus einem Hohlrad 26, einem Planetenradträger 27 mit an ihm gelagerten Planetenrädern 28 und einem Sonnenrad 29. Die Ausgangswelle 16 des Simpson-Radsatzes 6 ist mit dem Planetenradträger 27 verbunden, das Sonnenrad ist über eine Zwischenwelle 30 mit einer schaltbaren Kupplung 31 verbunden, über die der Kraftfluß zu einer Getriebeausgangswelle 32 schaltbar ist. Die Getriebeausgangswelle 32 ist zugleich auch mit dem Hohlrad 26 verbunden. Außerdem liegt zwischen der Getriebeausgangswelle 32 und der Zwischenwelle 30 ein Freilauf 33. Die Zwischenwelle 30 ist mit einer gehäusefesten Bremse 34 festsetzbar.

Wenn die Kupplungen und Bremsen so betätigt werden, wie nachfolgende Tabelle 1 angibt, sind alle fünf Getriebegänge G1 bis G5 und der Rückwärtsgang R schaltbar.

Tabelle 1

X    bedeutet Bremse bzw. Kupplung betätigt.

| Bremse/ Kupplung | 1. Gang | 2. Gang (1a) | 3. Gang | 4. Gang | 5. Gang | R-Gang |
|---|---|---|---|---|---|---|
| 3 | X | X | X | X | X | |
| 25 | | | | X | X | X |
| 23, 24 | | | X | | | |
| 20 | X | X | | | | X |
| 31 | X | | X | X | | X |
| 34 | | X | | | X | |

EP 0 418 426 B1

Eine weitere Variante des Fünfganggetriebes ergibt sich nach Tabelle 2.

Tabelle 2

X    bedeutet Bremse bzw. Kupplung betätigt.

| Bremse/ Kupplung | 1. Gang | 2. Gang | 3. Gang (2a) | 4. Gang | 5. Gang | R-Gang |
|---|---|---|---|---|---|---|
| 3 | X | X | X | X | X | |
| 25 | | | | X | X | X |
| 23, 24 | | X | X | | | |
| 20 | X | | | | | X |
| 31 | X | X | | X | | X |
| 34 | | | X | | X | |

Um hohe Planetenrelativdrehzahlen und kleine Planetenraddurchmesser zu vermeiden, werden in bevorzugter Ausführung der Erfindung anstelle von Einzelplanetenrädern abgestufte, koaxial zueinander liegende Planetenräder verwendet.

Ein Sechsganggetriebe mit sechs Vorwärtsgängen G1 bis G6 und einem Rückwärtsgang R ist gemäß Tabelle 3 realisierbar.

Tabelle 3

X    bedeutet Bremse bzw. Kupplung betätigt.

| Bremse/ Kupplung | 1. Gang | 2. Gang (1a) | 3. Gang | 4. Gang (2a) | 5. Gang | 6. Gang | R-Gang |
|---|---|---|---|---|---|---|---|
| 3 | X | X | X | X | X | X | |
| 25 | | | | | X | X | X |
| 23, 24 | | | X | X | | | |
| 20 | X | X | | | | | X |
| 31 | X | | X | | X | | X |
| 34 | | X | | X | | X | |

4

In Tabelle 4 sind vorteilhafte Getriebeübersetzungen angegeben.

Tabelle 4

| Gang | Schaltschema des 5-Gang-Automatikgetriebes | Übersetzungsbereiche |
|---|---|---|
| G1 | 1. Gang aus Dreigang-Planetensatz zusätzlicher Planetensatz läuft als Block um | 3.30-2.70 |
| G2 (1a) | 1. Gang aus Dreigang-Planetensatz mit Übersetzung aus dem zusätzlichen Planetensatz | 2.60-1.90 |
| G3 | 2. Gang aus Dreigang-Planetensatz zusätzlicher Planetensatz läuft als Block um | 1.70-1.35 |
| G4 | 3. Gang aus Dreigang-Planetensatz zusätzlicher Planetensatz läuft als Block um | 1.00 |
| G5 | 3. Gang aus Dreigang-Planetensatz mit Übersetzung aus dem zusätzlichen Planetensatz | 0.80-0.70 |

**Patentansprüche**

1.  Schaltanordnung für ein Automatikgetriebe eines Kraftfahrzeuges mit einem hydrodynamischen Wandler und mit einem Simpson-Radsatz, der über Kupplungen und Bremsen als Dreigangteil geschaltet wird, und mit einem weiteren Planetensatz, der über eine Bremse und eine Kupplung einen vierten Gang bildet, dadurch gekennzeichnet, daß die Schaltanordnung, die im Simpson-Radsatz (6) den ersten und/oder den zweiten Gang des Automatikgetriebes bewirkt, mit der Schaltanordnung des für den vierten Gang verwendeten Planetensatzes kombiniert wird, um einen weiteren Gang zu schalten.

2.  Schaltanordnung für ein Automatikgetriebe nach Anspruch 1, dadurch gekennzeichnet, daß als Schaltanordnung für den weiteren Gang die Schaltanordnung der Overdrive-Stufe (17) des vierten Ganges verwendet wird.

3.  Schaltanordnung für ein Automatikgetriebe nach Anspruch 1 oder 2, dadurch gekennzeichnet, daß die Getriebeübersetzungen so gewählt werden, daß eine sinnvolle, für das jeweilige Fahrzeug vorteilhafte Getriebeabstufung entsteht.

4.  Schaltanordnung für ein Automatikgetriebe nach Anspruch 1, 2 und 3, dadurch gekennzeichnet, daß die Schaltanordnung des Simpson-Radsatzes (6) des ersten Ganges mit der als Overdrive-Stufe (17) wirkenden Schaltanordnung des vierten Ganges kombiniert wird, wodurch zwischen dem ersten Gang und dem zweiten Gang des Simpson-Radsatzes (6) ein weiterer Getriebegang (1a) gelegt wird und somit ein Fünf-Gang-Getriebe entsteht.

5.  Schaltanordnung für ein Automatikgetriebe nach Anspruch 1, 2 und 3, dadurch gekennzeichnet, daß die Schaltanordnung des Simpson-Radsatzes (6) des zweiten Ganges mit der als Overdrive-Stufe (17) wirkenden Schaltanordnung des vierten Ganges kombiniert wird, wodurch zwischen dem zweiten und dritten Gang des Simpson-Radsatzes (6) ein weiterer Getriebegang (2a) gelegt wird und somit ein Fünf-Gang-Getriebe entsteht.

6.  Schaltanordnung für ein Automatikgetriebe nach Anspruch 1, 2 und 3, dadurch gekennzeichnet, daß wahlweise durch entsprechende Kupplungs- und Bremsenbetätigung der Schaltanordnung des Simpson-Radsatzes (6) des ersten Ganges oder des zweiten Ganges jeweils kombiniert mit der als Overdrive-Stufe (17) wirkenden Schaltanordnung des vierten Ganges zwischen dem ersten Gang und dem zweiten Gang sowie zwischen dem zweiten Gang und dritten Gang des Simpson-Radsatzes (6) jeweils ein weiterer Getriebegang (1a, 2a) gelegt wird und somit ein Sechs-Gang-Getriebe entsteht.

7.  Schaltanordnung für ein Automatikgetriebe nach einem der Ansprüche 1 - 6, dadurch gekennzeichnet, daß das zweite im Simpson-Radsatz (6) enthaltene Planetengetriebe (5) abgestufte Planetenräder besitzt, wobei das kleine Planetenrad mit dem Sonnenrad (11) und das größere Planetenrad mit dem Hohlrad (8) kämmt.

8. Schaltanordnung für ein Automatikgetriebe nach einem der Ansprüche 1 - 6, dadurch gekennzeichnet, daß beim zweiten Planetengetriebe (5) des Simpson-Radsatzes (6) zwei miteinander kammende, an einem Planetenradträger (9) gelagerte Planetenräder (35, 36) verwendet sind, wobei das eine Planetenrad (35) mit dem Sonnenrad (11) und das andere Planetenrad (36) mit dem Hohlrad (8) kämmt, und daß der Planetenradträger (9) von außen angetrieben ist und die Hohlräder (8, 15) der beiden Planetengetriebe (5, 7) durch eine Koppelwelle (37) miteinander verbunden sind, die zugleich als Abtrieb aus dem so modifizierten Simpson-Radsatz (38) dient.

**Claims**

1. A gear-shift arrangement for an automatic transmission system of a motor vehicle, having a hydrodynamic converter and a Simpson wheel set which is operated as a three-speed component via couplings and brakes, and having a further planet set which forms a fourth gear via a brake and a coupling, characterised in that the gear-shift arrangement, which produces the first and/or second gear of the automatic transmission in the Simpson wheel set (6), is combined with the gear-shift arrangement of the planet set used for fourth gear in order to engage a further gear.

2. A gear-shift arrangement for an automatic transmission system according to claim 1, characterised in that the gear-shift arrangement for the overdrive stage (17) of fourth gear is used as the gear-shift arrangement for the further gear.

3. A gear-shift arrangement for an automatic transmission system according to claim 1 or 2, characterised in that the gear ratios are selected such that a suitable gear progression, advantageous for the respective vehicle, is formed.

4. A gear-shift arrangement for an automatic transmission system according to claims 1, 2 and 3, characterised in that the gear-shift arrangement of the Simpson wheel set (6) for first gear is combined with the gear-shift arrangement for fourth gear acting as overdrive stage (17), as a result of which a further gear speed (1a) is produced between the first gear and the second gear of the Simpson wheel set (6) and consequently forms a five-speed transmission.

5. A gear-shift arrangement for an automatic transmission system according to claims 1, 2 and 3, characterised in that the gear-shift arrangement of the Simpson wheel set (6) for second gear is combined with the gear-shift arrangement for fourth gear acting as overdrive stage (17), as a result of which a further gear speed (2a) is produced between the second and third gear of the Simpson wheel set (6) and consequently forms a five-speed transmission.

6. A gear-shift arrangement for an automatic transmission system according to claims 1, 2 and 3, characterised in that optionally, through appropriate clutch and brake operation of the gear-shift arrangement of the Simpson wheel set (6) for first gear or second gear combined with the gear-shift arrangement for fourth gear acting as overdrive stage (17), a further gear speed (1a, 2a) is produced between the first gear and the second gear and between the second gear and third gear of the Simpson wheel set (6) and consequently forms a six-speed transmission.

7. A gear-shift arrangement for an automatic transmission system according to any one of claims 1 to 6, characterised in that the second planetary gear (5) contained in the Simpson wheel set (6) has stepped planet wheels, the small planet wheel meshing with the sun wheel (11) and the larger planet wheel meshing with the internal gear (8).

8. A gear-shift arrangement for an automatic transmission system according to any one of claims 1 to 6, characterised in that two planet wheels (35, 36), meshing with each other and mounted on a planet wheel carrier (9), are used in the second planetary gear (5) of the Simpson wheel set (6), one planet wheel (35) meshing with the sun wheel (11) and the other planet wheel (36) meshing with the internal gear (8), and in that the planet wheel carrier (9) is driven externally and the internal gears (8, 15) of the two planetary gears (5, 7) are connected to each other by a coupling shaft (37) which also serves as the output from the thus modified Simpson wheel set (38).

**Revendications**

1. Dispositif de changement de vitesse pour une boîte de vitesses automatique d'un véhicule automobile, comportant un convertisseur hydrodynamique et comportant un engrenage Simpson, qui est monté, par des accouplements et des freins, en tant qu'élément à trois rapports, et comportant un autre engrenage planétaire, qui par l'intermédiaire d'un frein et d'un accouplement, forme un quatrième rapport, caractérisé en ce que le dispositif de changement de vitesse, qui dans l'engrenage Simpson (6) active le premier et/ou le deuxième rapport de la boîte de changement de vitesse automatique, est combiné avec le dispositif de changement de vitesse de l'engrenage planétaire utilisé pour le quatrième rapport, afin de commander un autre rapport.

2. Dispositif de changement de vitesse pour une boîte de vitesses automatique selon la revendication 1, caractérisé en ce qu'on utilise comme dispositif de changement de vitesse pour l'autre rapport, le dispositif du surmultiplicateur (17) du quatrième rapport.

3. Dispositif de changement de vitesse pour une boîte de vitesses automatique selon la revendication 1 ou 2, caractérisé en ce que les surmultiplications sont choisies de manière qu'il en résulte un échelonnement judicieux des rapports, avantageux pour le véhicule considéré.

4. Dispositif de changement de vitesse pour une boîte de vitesses automatique selon les revendications 1, 2 et 3, caractérisé en ce que le dispositif de changement de vitesse de l'engrenage Simpson (6) du premier rapport est combiné avec le dispositif de changement de vitesse, agissant comme surmultiplicateur (7), du quatrième rapport, un autre rapport (1a) étant prévu entre le premier rapport et le deuxième rapport de l'engrenage Simpson, pour constituer ainsi une boîte de vitesses à cinq rapports.

5. Dispositif de changement de vitesse pour une boîte de vitesses automatique selon les revendications 1, 2 et 3, caractérisé en ce que le dispositif de changement de vitesse de l'engrenage Simpson (6) du premier rapport est combiné avec le dispositif de changement de vitesse agissant comme surmultiplicateur (7) du quatrième rapport, un autre rapport (2a) étant placé entre le deuxième et le troisième rapport de l'engrenage Simpson (6) pour former ainsi une boîte de vitesses à cinq rapports.

6. Dispositif de changement de vitesse pour une boîte de vitesses automatique selon les revendications 1, 2 et 3, caractérisé en ce qu'au choix, par actionnement approprié de l'accouplement et du frein du dispositif de changement de vitesse de l'engrenage Simpson (6) du premier rapport ou du deuxième rapport, combiné dans chaque cas avec le dispositif de changement de vitesse du quatrième rapport, agissant comme surmultiplicateur (17), il est placé entre le premier rapport et le deuxième rapport ainsi qu'entre le deuxième rapport et le troisième rapport de l'engrenage Simpson, un autre rapport (a1, 2a) pour former ainsi une boîte de vitesses à six rapports.

7. Dispositif de changement de vitesse pour une boîte de vitesses automatique selon l'une des revendications 1 à 6, caractérisé en ce que le deuxième engrenage planétaire (5), contenu dans l'engrenage Simpson (6), possède des roues satellites échelonnées, la petite roue satellite engrenant avec la roue planétaire (11) et la grande roue satellite avec la roue creuse (8).

8. Dispositif de changement de vitesse pour une boîte de vitesses automatique selon l'une des revendications 1 à 6, caractérisé en ce que le deuxième engrenage planétaire (5) de l'engrenage Simpson (6) possède deux roues satellites (35, 36) engrenant entre elles, montées sur un porte-satellites (9), une roue satellite engrenant avec la roue planétaire (11) et l'autre roue satellite (36) avec la roue creuse (8), et en ce que le porte-satellites (9) est entraîné de l'extérieur et les roues creuses (8, 15) des deux engrenages planétaires (5, 7) sont reliées entre elles par un arbre d'accouplement (37), qui sert en même temps d'arbre de sortie de l'engrenage Simpson (38) ainsi modifié.

FIG.1

EP 0 418 426 B1

FIG.2

G1

G2
G(1a)

G3

G4

G5

R

FIG.3

FIG.4